# EUROPEAN PATENT APPLICATION

(11) **EP 0 883 068 A2**
(43) Date of publication of application: **09.12.1998**
(21) Application number: 98201847.5
(22) Date of filing: 28.05.1998
(51) Int. Cl.: G06F 17/30

(54) **Entity retrieving system and method for retrieving entities**

(30) Priority: 28.05.1997 US 47998 P; 21.08.1997 US 915662
(71) Applicant: Home Information Services, Inc., New York, NY 10019 (US)
(72) Inventor: Ranger, Dennis, New York, NY 10019 (US)
(74) Representative: Quintelier, Claude

(57) **Abstract**

The present invention relates to an entity retrieving system and a method for retrieving entities. The system and method according to the invention comprises mutation means provided for cooperating with a memory, a processor and an interface and for establishing, for each particular entity to be retrieved upon request of a user, if said particular entity pertains to a dependent classes of the class identified by the user, and retrieving, upon establishing that said particular entity pertains to one of said dependent classes of said selected particular class, said additional properties of said dependent class.

## Description

The present invention relates to an entity retrieving system connectable to at least one data source, said system having a memory into which a plurality of classes are stored, each class defining the structure of said entities, said structure comprising a plurality of property definitions, each property definition identifying property values to be retrieved dedicated to said property definition, said property values being stored in said data sources, said system further comprising an interface and a processor connected to each other, wherein :
(a) said classes comprise at least one dependent class hierarchically linked to at least one other class, said dependent class comprising additional property definitions specifying additional property values, in addition to the property values of the classes from which it depends,
(b) said interface is provided for receiving a query and supplying said query to said processor, said query comprising an identifier for identifying a particular class and at least one of said property values,
(c) said processor being provided, under control of said query, for selecting, among said classes, said particular class dedicated to said identifier, and
(d) said interface is further provided : i) for accessing said data sources, under control of said processor; ii) for retrieving property values pertaining to at least one particular entity that comprise said at least one of said property values; and iii) for outputting the retrieved entities.

Such a system is known from US patent 5,560,005, which enables to transform entities stored in a plurality of remote, heterogeneous structured relational databases into a homogeneous data model. In this patent, several classes are defined, e.g. "SERVICE PROVIDER" forming an abstract class and "HOSPITAL", "PHYSICIAN" and "PRACTISE" forming derived base classes or dependent classes hierarchically linked to the "SERVICE PROVIDER" class. Classes dependent from the dependent classes may also occur. This forms an hierarchic modelled structure of the classes into which property values or data may be incorporated. A query supplied by a user to the known system is formed by a request comprising the class name and search arguments forming thus the identifier to be supplied to the system. The system searches in the remote databases the table entries matching the provided search arguments and returns the property values of the table entries to the requester.

A problem with the known system is that the system will return a number of data, from the found particular entities, i.e. only the properties to be incorporated in that particular class. This means that if the user selects a particular class and the entity to be returned belongs in fact to a dependent class hierarchically dependent from the particular class, the number of properties returned to the user will be limited to the properties to be incorporated in that particular class. If the user wants to check if a particular entity pertains to a dependent class, he has to supply an additional query to the system, wherein the particular dependent class is mentioned. The more dependent classes there are and/or the more entities are found, the more time consuming this checking operation will be.

This problem is solved in the system according to the invention, which system further comprises mutation means provided for cooperating with said memory, said processor and said interface and for establishing, for each particular entity to be retrieved, if said particular entity pertains to one of said dependent classes of said selected particular class, and retrieving, upon establishing that said particular entity pertains to one of said dependent classes of said selected particular class, said additional properties of said dependent class. In case a user requests now for entities belonging to a particular class, the mutation means of the system will check if the found entity also pertains to one of the dependent classes of the particular class and, if this is the case, return the additional properties to be incorporated to the dependent class. The answer to the request of the user will therefore be more complete than expected, without requiring the user to manually check if the entity belongs to a particular class.

Preferably, agents are stored in the memory of the system, each agent being dedicated to at least one of said classes, each agent being provided for cooperating with said interface for accessing at least one particular property value pertaining to said particular entity of said class, each agent comprising : (a) an address for addressing one of said data sources from which said particular property values are to be retrieved; (b) a series of instructions indicating which data from the addressed data source are to be retrieved by said agent; and (c) at least one agent parameter for assigning, for each property value to be retrieved, a portion of said data to one of said property definitions. In particular, a reliability parameter is assigned to said agent.

Such a reliability parameter enables to indicate how trustworthy the addressed data source is. In case for example a first agent retrieves a first entity and a second agent retrieves a second entity, wherein the first entity is identical to the second entity except for one or more property values that are not equal to each other, the system may then, based on the reliability parameter of the agents, decide that one data source has provided a wrong property value or that there is one entity with an uncertainty concerning the property values that do not correspond or that those two entities in fact refer to two different entities.

According to a preferred embodiment, said system further comprises means for displaying the retrieved entities to a user and means for generating, upon receipt of said retrieved entities, at least one list, each list comprising a plurality of property value ranges for subdividing said retrieved entities, and said interface is further provided for enabling said user to select one property value range within one of said lists.

Such lists are very convenient when a large number of entities have been retrieved by the system. With known systems, the user would have to scroll through the results, without having an idea how the entities are structured. In this case, a logical structure of the retrieved entities is presented to the user, wherein the user can select a range. The entities belonging to that range will be shown to the user. This system enables thus to the user to view the results in a more structured way.

The present invention further relates to a method for retrieving entities by using a system according to anyone of the preceding claims comprising the steps of : a) receiving said query and supplying said query to a processor; b) selecting among said classes, said particular class dedicated to said identifier, c) accessing said data sources, under control of said processor, d) retrieving property values pertaining to at least one particular entity that comprise said at least one of said property values and e) outputting the retrieved entities. According to the invention, said method further comprises the step of establishing, for each particular entity to be retrieved, if said particular entity pertains to one of said dependent classes of said selected particular class, and for retrieving, upon establishing that said particular entity pertains to one of said dependent classes of said selected particular class, said additional properties of said dependent class.

The invention will now be described with reference to the annexed drawings, wherein :

Figure 1 illustrates schematically a preferred embodiment of the entity retrieving system according to the present invention.

Figure 2 illustrates schematically from which data sources the entities may be retrieved by the entity retrieving system according to an alternative embodiment of the present invention.

Figure 3 illustrates a database structure according to a preferred embodiment which is used for implementing the system according to the present invention.

Figure 4 illustrates an example of a number of classes with their hierarchy.

Figure 5 illustrates an example of the attributes and contents of a class

Figure 6 illustrates an example of an entity of the class according to Figure 5.

Figure 7 illustrates an example of agents returning inconsistent and ambiguous property values.

Figure 8 illustrates a display supplied to the user when a relatively large number of entities are retrieved by the system according to the present invention.

Figures 9 to 11 illustrate examples of agents.

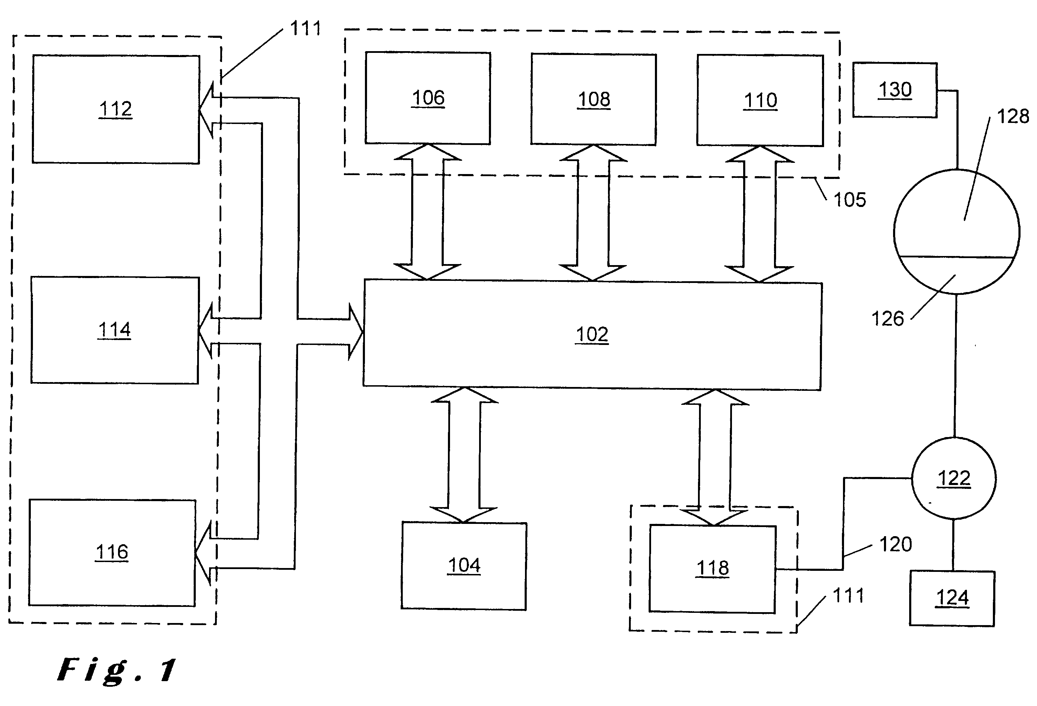

As illustrated in Figure 1, the entity retrieving system 100 according to the present invention comprises a bus 102 to which a memory 105, an interface 111 and a processor 104 are connected. In particular, the memory is formed by a main memory 106, such as a random access memory (RAM), a read only memory (ROM) 108 and a storage device 110, such as a magnetic disk or optical disk. The interface comprises a display 112 for showing the retrieved entities to a user, an input device 114 such as a keyboard enabling a user to input a query, a communication interface 118 and optionally a cursor control 116 such as a mouse.

The system according to the invention is connectable to data sources, which may be internal to the system, for example data sources stored in the memory 105, and/or external to the system. For external data sources, use is made of the communication interface 118 for connecting the external data source to the system. Data sources may be located in a host device 124, connected to the system through the intermediary of the local network 122 and a network link 120. Data sources may further be stored in a server 130 connected to the network 122 through the intermediary of a communication network such as the Internet 128 which is accessible via an internet service provider (ISP) 126 or the like.

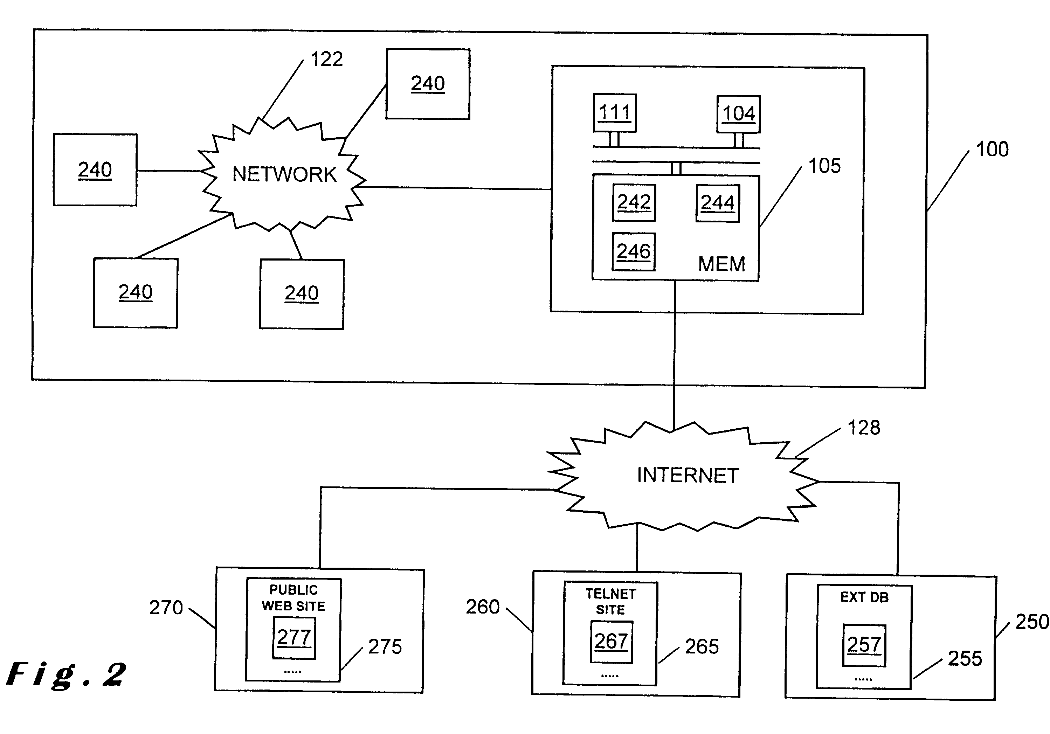

Figure 2 shows an entity retrieving system 100 according to an alternative embodiment, wherein data sources are stored. The retrieved entities may be represented to a plurality of user using a personal computer 240 with a user interface, in particular a web browser. The personal computers are connected, through the intermediary of network 122 to a network computer 126, in particular a web server, enabling a connection to the internet 128. The network computer comprises a memory 105 into which several databases are stored, for example spreadsheets 242, internal web sites 244 or other databases 246. External data source formats may be formed by external databases 257, telnet sites 267 or public web sites 277, stored in respective memories 255, 265 and 275 in respective computer systems 250, 260, 270. It is also conceivable, according to another embodiment of the present invention, to have for example video or sound data sources. The entity retrieving system of the present invention may be applied for retrieving entities stored in data sources having different formats, such as will be described further.

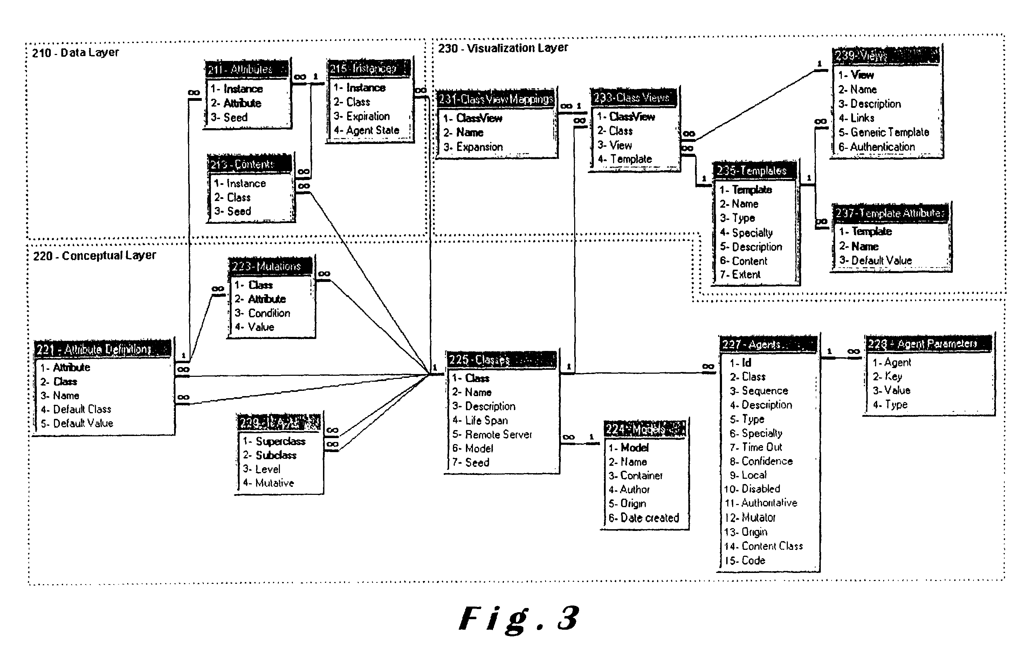

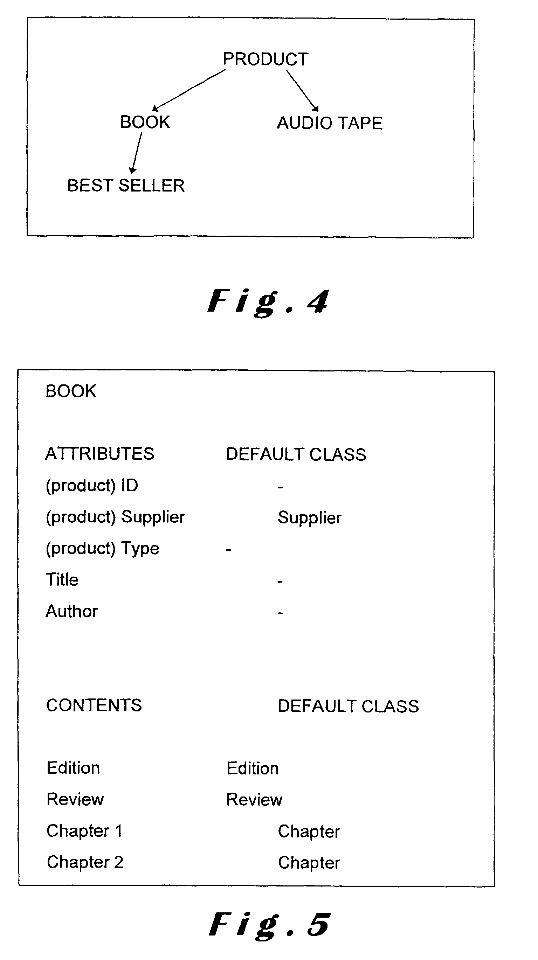

Referring to Figure 3, there is shown a possible database structure used when implementing the entity retrieving system according to the present invention. It forms a structured generic model or a so called "meta model" of a specific modelled structure, an example of which will be described when referring to Figures 4 to 6. It should be clear that this relational database structure is only one possible way to implement the present invention. In Figure 3, there are shown a number of tables, each table having a number of fields, each field defining a certain function. Many to one relationships between the fields are indicated by interconnecting lines with an indication "∞" on the many side and "1" on the one side. For example, instances 215 may have many attributes 211. Accordingly, there is an indication "∞" on the many side of the Instance field 211-1 and an indication "1" on the one side of the Instance field 215-1.

In Figure 3, distinction is made between a conceptual layer 220 forming an intermediary between a data layer 210 and a visualisation layer 230.

### CONCEPTUAL LAYER

The conceptual layer 220 comprises fields describing how data is organised within a defined model. The main part of the conceptual layer 220 is formed by the classes 225. A class 225 pertains to a model 224. The model table enables to support multiple models and dependent models. A specific model might be composed of a plurality of dependent models. For example, a banking model might have an accounting and a lending dependent model. The model table 224 comprises fields with the following meaning :
- 224-1: Model is a unique identifier, in particular a number for identifying the model. For example, the banking model has number "1001", the accounting "1101" and the lending model "1102"
- 224-2: Name indicates the name of the model in a human readable manner. In the example given above, this field would for example be "banking", "accounting" and "lending".
- 224-3: Container : If the model is a dependent model, this field contains the unique identifier of the model from which it depends. For example the "accounting" model would have in this field the unique identifier of the banking model, i.e. "1001". It should be clear that a dependent model may be dependent of a dependent model. For example, the accounting model may comprise several dependent models, which would have in this field the number "1101".
- 224-4: Author indicates the name or a user ID of the person that created this model.
- 224-5: Origin : If this model has been imported from a data source, the address of the data source is indicated here. In case the data source has been accessed through the Internet, it would be an URL.
- 224-6: Date Created indicates the creation date of the model.

Each model 224 has at least one class 225. Each class 225 is provided for defining the structure of entities to be retrieved. The class table 225 comprises the fields :
- 225-1: Class is a unique identifier for identifying the class, in particular a number.
- 225-2: Name is another unique identifier for the class but in a format convenient for human use. In particular it is formed by a string of characters, e.g. "book" or "product".
- 225-3: Description is provided for enabling the operator maintaining the system to add annotation and comments for this class.
- 225-4: Life Span indicates how long, for example in seconds, the entities belonging to that class should be kept in the memory of the system. For example a class in which the price of the entities is retrieved should have a relatively short life span, whereas a class from which the data is not quickly outdated may have a longer life span.
- 225-5: Remote server : In case a class is defined in another model and/or in a remote data source, the address of this model / data source is mentioned in this field.
- 225-6: Model contains the model unique identifier 224-1 to which the class is dedicated.
- 225-7: Seed indicates an Attribute Definition unique identifier, which is the attribute field 221-1 as will be described further, indicating which value is unique for each instance in the class. For example, a book may have as unique value its ISBN or ID number.

Each class can have a plurality of dependent classes or can be a dependent class from a plurality of classes. For this purpose, an Is A table 229 is provided for defining the hierarchy. It comprises the fields :
- 229-1: Superclass comprising the unique identifier of a class,
- 229-2: Subclass comprising the unique identifier of a dependent class of the superclass identified in field
- 229-3: Level showing the number of intermediate classes between the superclass 229-1 and the possibly indirect subclass 229-2, wherein level 0 indicates that the superclass and subclass are equal, level 1 indicates that subclass is a direct dependent class of the superclass, level 2 indicates that there is one intermediate dependent class between the subclass 229-2 and the superclass 229-1, etc.; this multiple level architecture improves the performance of the system and
- 229-4: Mutative indicating whether or not one or more mutation patterns or agents are dedicated to the class.

Each class has a plurality of attribute definitions. The attribute definitions table 221 comprises property definitions, with the following fields :
- 221-1: Attribute is a unique identifier for an attribute definition, eg. a number
- 221-2: Class identifies the class 225-1 that contains this attribute as part of its structure
- 221-3: Name is an identifier of the attribute in text format
- 221-4: Default Class is an identifier of another class if the property contains a reference to this other class. For example a supplier attribute in a product class could refer to a supplier class.
- 221-5: Default Value comprises a default value in case the property value for this attribute is not found.

One or a plurality of mutation patterns can be dedicated to each class. The mutations table 223 comprises mutation pattern portion with one condition, for example book's pages is greater than or equal to 50. A mutation pattern may be formed by a plurality of conditions each condition being defined in a mutation pattern portion, for example book's pages is greater than or equal to 50 and price is less than $10. This table comprises the fields :
- 223-1: Class is the identifier of the class 225-1 to which the mutation pattern element is dedicated
- 223-2: Attribute is the identifier of the attribute 221-1 on which a condition applies, for example the attribute pages
- 223-3: Condition is an operator for example "greater than or equal to", "equal to", "not equal to", ...
- 223-4: Value is the value to which the property value should be compared, for example "50"

One or a plurality of agents can be dedicated to each class. The agents table 227 comprises the following fields :
- 227-1: ID is a unique machine readable identifier for the agent
- 227-2: Class identifies the class to which the agent is dedicated
- 227-3: Sequence is a number defining sequential order of invocation of the agents for a class (optional) It defines the agent's priority. If two agents are ready to be run, the one with the greater priority has precedence. The lower the sequence, the greater the priority.
- 227-4: Description is an annotation for providing a human readable description of the agent
- 227-5: Type specifies whether the agent is an attribute agent or a content agent. An attribute agent is provided for retrieving attributes while a content agent is provided for retrieving contents. The difference between contents and attributes is explained further when referring to the attributes and contents tables 211 and 213.
- 227-6: Specialty specifies the nature of the data source the agent queries, e.g. ODBC, Web, Corba, Telnet
- 227-7: Time Out indicates how long an agent should wait when the data source is not responding
- 227-8: Confidence indicates how trustworthy the property values retrieved from the data source (see origin 227-13) is
- 227-9: Local indicates whether or not the agent is local; if an agent is local then the agent is only used for the class to which it is dedicated, not in its dependent classes
- 227-10: Disabled indicates whether the agent is not to be used. This field is used for debugging and diagnostic purposes
- 227-11: Authoritative : if this field is yes and if this agent receives an empty response to its request, then the entity does not exist
- 227-12: Mutator indicates whether this agent is a mutation agent
- 227-13: Origin indicates the data source identity, in particular the path name of the data source from which the property values are to be retrieved
- 227-14: Content Class identifies the class 225-1 of the references returned by the agent, if the agent is a content agent.
- 227-15: Code comprises the instructions, forming a parameterised query, to be executed when running the agent

When an agent applies the code 227-15, data is returned comprising the requested property values. Each property value has to be extracted as a portion of the returned data. For this purpose, agent parameters are dedicated to the agent. The agent parameters table 228 comprises the fields :
- 228-1: Agent identifies the agent 227-1 to which the agent parameter is dedicated.
- 228-2: Key is a field dependent of the specialty 227-6 of the agent;
for ODBC agents, key is an index (e.g. 1,2,3,...) assigned to each portion of data returned by a query;
for Web agents, key is the identifier of the property definition to which the portion of data will be assigned
- 228-3: Value is a field dependent of the specialty 227-6 of the agent;
for ODBC agents, value is the identifier of the property definition to which the portion of data identified by the key field will be assigned
for Web agents, value is the pattern used for identifying the portion of data to be extracted and assigned to the property definition indicated by the key field 228-2
- 228-4: Type is a field dependent of the specialty 227-6 of the agent;
for ODBC agents, this field is not used for Web agents, type is a code indicating whether to perform pattern matching on the HTML or on the text without the HTML tags.

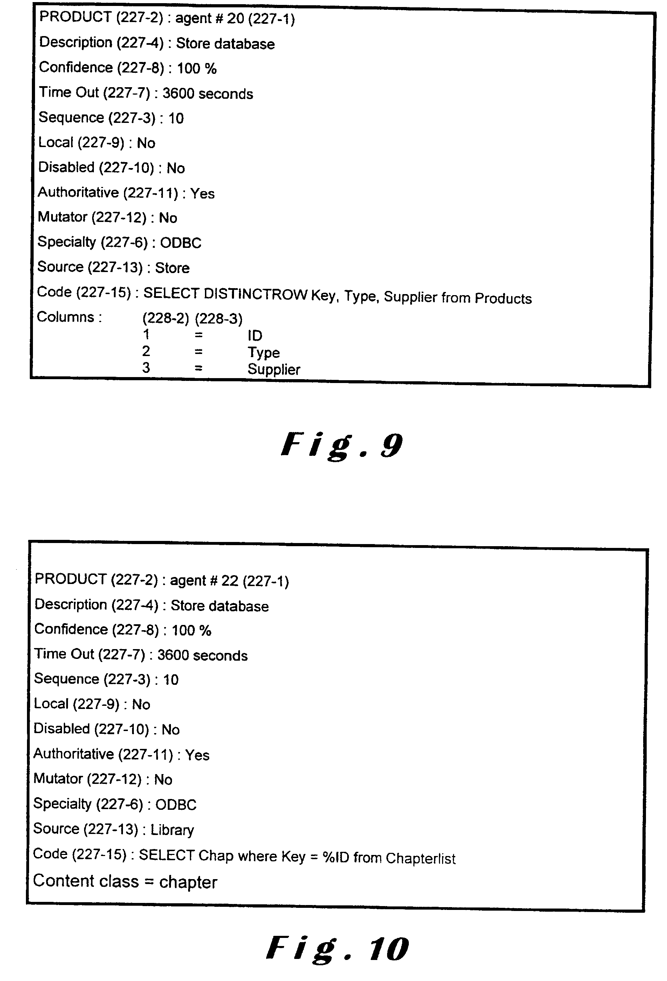

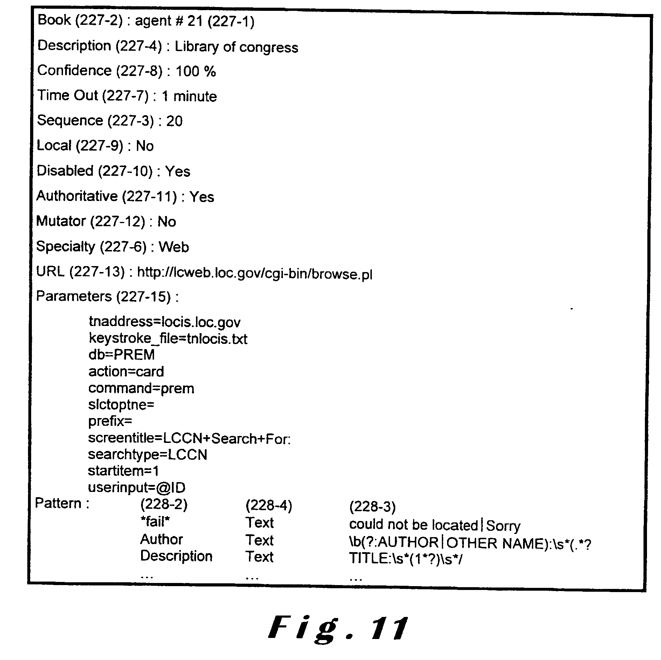

For the purpose of clarity, an example of agents with parameters is given in Figures 9 to 11, wherein the reference numbers indicate in which field from Figure 3 the values are stored. Figure 9 gives an example of an attribute agent with specialty "ODBC", figure 10 a content agent with specialty "ODBC" and figure 11 an attribute agent with specialty "WEB". The fields provided below specialty are shown in function of the selected type and specialty.

### VISUALISATION LAYER

The visualisation layer 230 is provided for comprising data from which a predetermined presentation of an entity is selected and produced. A view is here defined as what a group of users is allowed to see; it is represented as a set of templates attached to classes. It should be noted that some classes can have no template for a given view, meaning that the user has no access to the data requested or that there is a view to be inherited from one classes from which the dependent class depends, or that a default view has been assigned.

A class view table 233 is provided for determining a single template given a view and a class, or a single view given a template and a class or a list of classes given a template and a view. This table comprises the fields :
- 233-1: Class View is a unique identifier, e.g. a serial number, for a class view
- 233-2: Class is the unique identifier of the Class 225-1 to which the class view is dedicated
- 233-3: View is the unique identifier of the View 239-1 to which the class view is dedicated
- 233-4: Template is the unique identifier of the Template 235-1 to which the class view is dedicated

To each class view, one ore more class view mappings can be dedicated. The class view mappings table 231 holds variable substitution data. When a template is processed, for example as HTML or VRML generation, "value holders" such as "%supplier" are substituted by their values. A value holder can refer by name either to a class defined attribute, a class view mapping variable or a template variable. An attribute has precedence over a class view mapping variable which has precedence over a template variable. In other words, the value of a value holder in a template will default to the value of a template variable only as a last resort. The class view mappings table comprises the fields :
- 231-1: Class view is a unique identifier of the Class View 233-1 to which the class view mapping is dedicated.
- 231-2: Name is the name of the variable, for example supplier.
- 231-3: Expansion is a value of a variable, in particular a template.

Class views are dedicated to views. The view table 239 comprises the definition of a view. A view represents what a group of users is allowed to see. A view is a set of templates assigned to classes. Each template is retrievable from the class view table, given the view and a class. The view table comprises the fields :
- 239-1: View is a unique identifier for the view.
- 239-2: Name is the name of the view, for example "Inventory managers"
- 239-3: Description is provided for holding annotations
- 239-4: Links is the text of a default link template for the view, which is used when no template of the type link (see 235-3) has been dedicated to a view.
- 239-5: Generic template is a number identifying a default template 237-1 used when more than one entity is found; although the user has requested for one entity, for example one book; this can occur when there is a "conflict of opinion" as will be explained further.
- 239-6: Authentication indicates the name of a user's group if the present view is restricted to particular users. A password could be requested for some particular views. This password protection of views is performed with techniques known as such.

Each class view is dedicated to a template. The templates table 235 comprises data related for producing a presentation of an instance of a class, for example HTML, XML or VRML presentations. This table comprises the fields :
- 235-1: Template is a unique identifier for a template
- 235-2: Name is a text indicating the name of the template
- 235-3: Type indicates the type of the template, for example an object template (in particular an item), a space template (in particular a page), a link template (for representing a value of an attribute, in particular a hyperlink), ...
- 235-4: Specialty determines the presentation medium, for example HTML, VRML, XML, ...
- 235-5: Description enables the manager of the system to add comments and annotations
- 235-6: Content gives the actual text of the template, with embedded value holders
- 235-7: Extent indicates spatial dimensions for three dimensional objects or spaces for VRML presentations

Each template may comprise a number of template attributes. The template attributes table 237 comprises template variables used in value substitution, as explained with reference to the class view mappings table 231. The template attributes table comprises the fields :
- 237-1: Template is the unique identifier of the template 235-1 to which the template attribute is dedicated
- 237-2: Name identifies the name of the variable
- 237-3: Default value comprises, if applicable a default value of that variable

### DATA LAYER

In order to improve response time, instances or entities retrieved by the system according to the present invention are preferably cached. The content and attributes of instances are stored separately. This enables to cache for example the attributes of an instance and not its contents or vice versa. An instance is cached no longer than is permitted by its class's life span 235-4.

The instance table 215 is provided for holding the instances or entities cached by the system according to the present invention. This table comprises the fields :
- 215-1: Instance is a unique identifier of an instance
- 215-2: Class is the identifier of the class 225-1 to which the entity or instance pertains
- 215-3: Expiration indicates the moment when a cached instance expires. This moment is calculated on the moment the data is retrieved plus the life span indicated in the life span field 225-4.
- 215-4: Agent state is a list of agent identifiers 227-1 that were used for retrieving the cached contents or attributes of an instance.

The contents table 213 comprises the content, retrieved by means of a content agent, of cached instances. A content is a list of references to instances of a given class. The content table comprises the fields :
- 213-1: Instance is the identifier 215-1 of the cached instance to which the content pertains
- 213-2: Class is the identifier of the class 225-1 of the cached content
- 213-3: Seed is a value from a list of values that makes up the content of an instance, that, together with the content class, specifies an instance of that class. The content seeds form a portion of property values to be retrieved.

The attributes table 211 comprises the attributes, retrieved by means of a content agent, of cached instances. This table comprises the fields :
- 211-1: Instance is the identifier 215-1 of the cached instance to which the content pertains
- 213-2: Attribute is the identifier of the attribute definition 221-1 to which the cached attribute pertains to
- 213-3: Seed is the cached value or property value of the attribute.

Figure 4 illustrates an example of a store model having a plurality of classes : "PRODUCT", "BOOK", "AUDIO TAPE" and "BEST-SELLER". Classes "BOOK" and "AUDIO TAPE" are dependent classes from the "PRODUCT" class. A best-seller is a particular book. Therefore, the "BEST-SELLER" class depends from the class "BOOK". In case a class "VIDEO TAPE" has to be added to the store model, it can easily be added as a dependent class of the "PRODUCT" class.

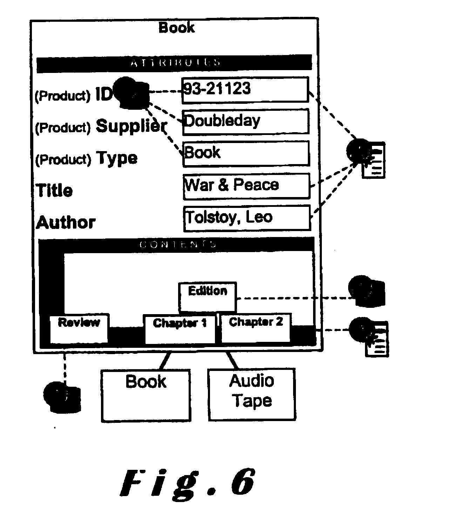

Each class has a number of property definitions, in particular attribute and content definitions. Referring to Figure 5, the "PRODUCT" class has for example the attribute definitions 221 with name 221-3 "ID", "SUPPLIER" and "TYPE", wherein ID is a unique identifier for a particular product, the supplier attribute is a reference to a supplier from the "SUPPLIER" class, and type describes the type of the product. ID and Type identify property values for simple data, e.g. numbers or strings, whereas Supplier identifies a property value referring to another entity, e.g. a Supplier entity pertaining to the Supplier class. The default class 221-4 field for this property definition will therefore be "SUPPLIER". The "BOOK" class is a dependent class from the "PRODUCT" class and inherits therefore all the property definitions from the classes from which it depends. In addition, it comprises additional property definitions, such as illustrated in Figure 5, i.e. the attributes "Title", "Author" and the contents "EDITION", "REVIEW", "CHAPTER 1", "CHAPTER 2".

Attributes are "single-valued" in the sense that each attribute has only one value. The title of a book is a single piece of data. Content properties, on the other hand, refer to open-ended lists of or references to other entities. For example, Chapters and Reviews are content properties of a book; they list the book's chapters and reviews. Content properties can also be inherited. For example, the Sales content property of a Book could be inherited from Product.

Figure 6 illustrates an example of a book entity having the following property values : "93-21123" as ID, "Doubleday" as Supplier, "Book" as Type, "War & Peace" as Title and "Tolstoy, Leo" as Author. The content properties refer to other entities. This entity is found by the system according to the invention after the user has input a request, for example :
http://www.server.com/query.pl?Product=93-21123&View=Customer For such a query, it is assumed that a product can only be retrieved based on its ID number. In this case, the seed field 225-7 would indicate the unique identifier of the attribute definition for ID number. The search possibilities could be enhanced by permitting to indicate in a query any property value pertaining to a class. The request would have then for example the following format :
http://www.server.com/query.pl?Product. ID=93-21 123&View=Customer

The interface 111 receives this query and supplies it to the processor 104 of the system. The processor will select from the memory the "Product" class, since the user has keyed in Product as particular class. An agent dedicated to the Product class, is provided for retrieving the Supplier and Type property values based on the ID number. These property values are for example stored in an internal data source, for example a relational database 246 (see Figure 2). The agent comprises an address in field Origin 227-13 indicating the path name of the database 246 data source. In order to enable to retrieve data from different types of data sources, there are provided different types of agents. For a relational database such as Oracle ®, the agent is an ODBC agent type. The agent further comprises a series of instructions indicating which data from the addressed data source are to be retrieved by the agent, for example :
"Select Key, Type, Supplier FROM Products"

The agent further comprises in its agent parameters 228 for assigning, for each property value to be retrieved, a portion of the data to one of the property definitions. In this case, "Key" is assigned to "ID" property definition, "Type" to "Type" property definition and "Supplier" to "Supplier" property definition.

This agent co-operates with the interface 111 for accessing the data source, under control of the processor 104 and for retrieving the requested data. In the example mentioned hereinabove, the following data will be returned : "93-21123" forming the ID, "Doubleday" forming the Supplier and "Book" forming the type. This data is stored in the memory of the system and will be provided to the user such as in known entity retrieving systems.

According to the invention, the system further comprises mutation means. The system will in particular check if mutation patterns or mutation agents are dedicated to one of the dependent classes. This can in particular be performed by verifying, for each dependent class, if the mutative field 229-4 is yes. In this case, there is checked if there are mutation patterns or mutation agents dedicated to the classes "Book" and "Audio Tape". A mutation pattern dedicated to the classes book comprises for example the condition : "If the Product Type = "book" then mutate the Product into a Book". The system thus verifies if the found property value for the product type falls within the condition. For this purpose, the processor compares the property values stored in the memory with the condition of the mutation pattern. In this case the retrieved property for the product type is a "Book". Consequently, a mutation occurs, wherein the class of the entity becomes "Book" and wherein the system will retrieve the additional property values pertaining to the class "Book".

In particular, retrieving the additional property values is again performed by one or several agents dedicated to this class. For example, an agent will be provided for retrieving a book's author and title from a web site given the book's ID. Since the data will be retrieved from a web site, the agent type is in this case "Web". The address in the Origin field is in this case an URL of the web site where the data should be retrieved, the instructions form in this case the steps required for accessing a web page where the requested data is shown. This is performed by providing the ID number "93-21123" and assigning this number to a corresponding parameter on the web site, for example LCCN Number. The agent further comprises agent parameters, by means of which pattern matching is performed, wherein the property values are extracted from web content by applying regular expressions, a known technique i.a. from "Mastering Regular Expressions" by Jeffrey E.F. Friedl, January 1997. For example the title property value could be found by searching on the page the expression "TITLE :" and looking for a series of words after the expression and located between spaces. It will be clear that this technique is applicable to all web pages having a predetermined structured presentation of the data. The ID is for example mentioned after the expression "LCCN NUMBER :" and the author after the expression "Author/Other Name :". In the example given, the following additional property values are retrieved by the system : "War & Peace" as title and "Tolstoy, Leo" as author.

Another agent could for example be provided for finding books chapters in a Telnet site given the book's ID. A further agent could be provided for accessing a relational database where book reviews are gathered from multiple sources, given a book's title and author. It should also be clear that the agents dedicated to a class to which the dependent class is hierarchically linked are also used. In this case, agents dedicated to the class products have already been processed, since book is a particular product and the user input the class "product" in his query. Now, the system has retrieved additional data, i.e. additional property values such as the title of the book, the author, reviews and chapters. This additional data is supplied to the user, although he had requested data relating to a product. The answer to the request of the user is automatically completed by the system according to the present invention with additional data which was unexpected by the user.

When several agents are provided for retrieving, from different data sources, property values that should correspond, it may occur that some property values retrieve are not equal to each other. For example, a customer's telephone number may be recorded differently in two data sources, or there might be three different authors for the same book title. In the first case, it is probable that the same customer has two phone numbers (an inconsistency), in the second case, we may be dealing with three altogether different books (an ambiguity).

Inconsistencies and ambiguities are unavoidable when integrating multiple data sources that were not conceived together and that may not even be managed by the same organisation. It is an object to deal in an appropriate way with ambiguities and inconsistencies within data. The manner in which the system according to the invention deals with those problems will be explained by means of an example.

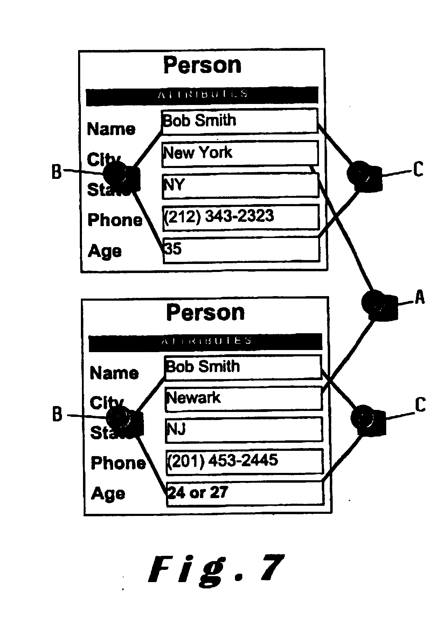

Assume that agents are looking for a Person named Bob Smith. An agent A looks for a person's address given the person's name. Two agents B and C look for a person' age given the person's name, each agent targeting a separate data source. This example is illustrated in Figure 7.

The agent A returns with not one but two "Bob Smith", one living in New York and the other in Newark. The question is: Are we looking at two Bob Smith or only one but with a conflicting address? The answer depends on how much we trust agent A to be accurate or, in other words, how much we trust its data source to return correct addresses. For this purpose, a reliability or confidence parameter 227-8 is assigned to the agent. Let's say we trust agent A for 100%. Then we have no choice but to see two Bob Smith and two entities are thus shown to the user. In case agent A has a confidence parameter of only 10%, then the system will show only one entity showing two possibilities for a property value, e.g. "New York OR Newark".

Assume now agent A has a 100% reliability parameter. Agent B and C for the Bob Smith in New York obtain his age. Both agree that it is 35. However agents B and C for the Bob Smith in Newark disagree about his age. Agent B indicates 24 and agent C 27. Are we looking at two Bob Smith living in Newark? In this case, Agents B and C have been declared as fallible. That they disagree is not sufficient grounds to see two separate Bob Smith living in Newark; so we simply record the fact that there is a "conflict of opinion" between data sources about the age the Bob Smith living in Newark. Because of ambiguities and inconsistencies, a request to the system according to the invention to find an entity may end up returning more than one entity, with some "conflicts of opinion" about some of them. When this occurs, the user is presented with a display using the generic template 239-5 for the requested view, e.g. a Web page, that gives a choice between these entities and highlights conflicts.

In case agents B and C have substantially a same reliability parameter, which is relatively low, for example 10%, then one entity will be presented to the user with an indication of two property values for the age : "24 OR 27", such as illustrated in Figure 7. In case agents B and C have substantially the same reliability parameter, which is relatively high, for example 90%, then the systems interprets that there are two distinct entities as being two separate entities which will be presented to the user, each with its own age. In case agent B is substantially more reliable than agent C, for example agent B is at least 25 % more reliable than agent C, then the system will rely on the property value retrieved by agent B, i.e. 24, and only the entity retrieved having this value will be presented to the user.

Consequently, by providing a reliability parameter to the agents, the system interprets inconsistencies and ambiguities in property values, filters out unreliable property values and/or presents it in an appropriate fashion to the user. It should be noted that this provision of a reliability parameter could also be applied in other systems, in particular in systems without mutation means, and in general to any retrieving system provided for retrieving data from one or a plurality of data sources.

Referring to Figure 4, there is shown a dependent class "Best-seller" dependent from the class "Book". Now that the product requested by the user has been determined by the system as being a book, the system will further verify if the found entity should not further be mutated to the class "Best-seller". A mutation agent, i.e. an agent the mutator field 227-12 of which indicating that the agent is a mutation agent, which agent is dedicated to the class "Best-seller" is for example provided for accessing an external database or web site comprising a best-seller list. Based for example on the book's title and the author, the agent will search, in the same manner as explained hereinabove, in the addressed data source for the requested data. If the agent finds the requested book in the database, this means that the entity is a best-seller and the found entity is mutated to the class "Best-seller" as explained hereinabove. On the other hand, if the requested entity is not present in the best-seller data source, for example the agent receives a message such as "Could not be located", this signifies that the book is not a best-seller and therefore a mutation will not be performed.

The example of the mutation pattern described hereinabove had a single value condition with an operator "equal to". In general, it should be noted that all types of conditions are conceivable, with all types of operators such as "larger than", "between ... and ...". A list of single values is also conceivable. A mutation pattern could also have as condition "If all the other mutation patterns from the same level fail, then mutate to this dependent class". Such a mutation pattern signifies that the class to which the dependent classes of that level are hierarchically linked, is an abstract class, i.e. a class for which comprise no entities or instances. In the example given, if the store only sells books and audio tapes, the product class could then be an abstract class, since every entity is either a book or an audio tape. The mutation pattern for audio tape would be "If product type is not a book then mutate to audio tape class".

A further aspect of the present invention is the visualisation of the retrieved entities, in particular which property values are presented to the user based on its request. In the given example, the user has input in its query : "View=Customer", wherein all the found properties, except the supplier would be shown to the user. Another view could for example be a view for the staff, which view would require a password and provide in addition to the property values mentioned (including the supplier property value) an indication of the stock of the product in the store. An additional agent or above mentioned agent provided for retrieving the supplier and the type would be provided for retrieving in the internal database of the store, the numbers in stock of the requested product.

Based on the requested view, corresponding to views name 239-2, and the requested class corresponding to class name 225-2, a dedicated class view 233 is determined by the system, having a dedicated template 233-4. The content field 235-6 of the template table 235 will supply the instructions for producing the requested view to a user.

In general, once an entity has been recovered from the data sources, it can be shown to the user who requested it. How the entity is shown and how much of it is shown depends on the template that's used to generate the presentation. Each template is dedicated to a class. A dependent class can inherit presentations from its classes from which it depends or can define its own templates.

There are different kinds of templates, including :
a page template to display an entity as a full page, for example, a Book page will show the book's title, author, price, availability etc.;
an object template to display a summary of an entity in the page of another related entity, for example, a Book page would also show a list of its Reviews, each one summarized as a few lines and displayed using their object template; and
a link template to display an attribute value, in particular a hyperlink to an entity, for example, the summary of a Review listed in a Book page would include a hyperlink to the Review page where the full review can be read.

A user display, in particular a web page, is constructed on the fly from the templates. Each template is in fact a parameterised web page or VRML scene or other presentation to a user. The blanks are filled by the values of the entity's attributes and content properties before display. When the value filling a "blank" is a reference to another entity, then a hyperlink to that entity is automatically inserted. Hyperlinks are thus always correct and current, reflecting the data in the data sources at the time of the request.

If no template for a view on a class is defined (or inherited) for a given group of users, then no user belonging to that group can see entities of that class. For example, there would be no views defined on the class Inventory for customers, meaning that customers could not peruse the Inventory. If an attribute of a class is not shown in a template for a given group, then no member of that group can see the value of that attribute. For example, the views for class Employee would include the Salary attribute only for the Manager group (meaning that only managers can see employee salaries).

Between the moment an user requests to view an entity and the moment that entity is viewed for example as a Web page or a VRML scene or other presentation, a lot can happen as the relevant agents access data sources, triggering further agents until eventually all activated agents are done. Instead of waiting for all agents to have completed before displaying a Web page, a more dynamic approach may preferably be applied, a technique which is known as "server push", showing a Web page as soon as some data is available about the requested entity and then refreshing the page automatically when new data is retrieved. In particular, when mutation is applied, the user will first see data relating to the requested class and upon refreshing, the user will also see the additional property values. This way, the user does not have to wait too long to get a feedback and may elect to follow a hyperlink before the entity is completely shown and while the incomplete page is waiting to be refreshed with additional property values.

In a preferred embodiment, there is first checked which view is requested by the user and determined which properties should be supplied to the user. Based on this determination, only the agents required for the requested view are triggered, in order to supply more quickly the requested data to the user.

A further aspect of the present invention relates to supplying the results of a query input by the user in a more structured manner. Queries supplied to the system may lead in a large number of entities to be retrieved and presented to the user. With known systems, the user would be confronted with long lists of results, in particular hyperlinks, to scroll through.

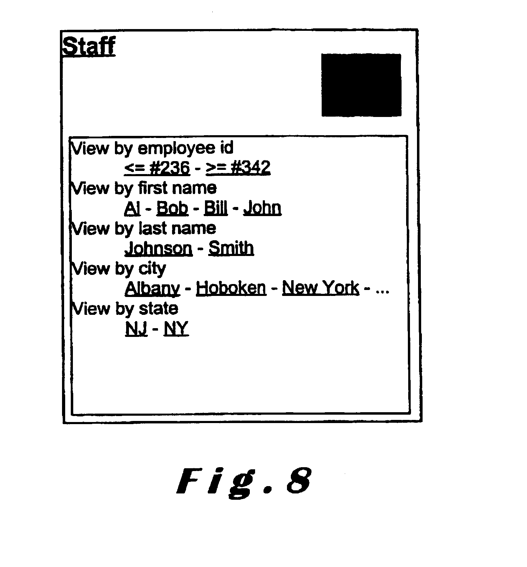

The system according to the present invention takes advantage of the fact that the retrieved entities are dedicated to a structured model and thus that it has some understanding of entities. It is thus possible to organise long lists of entities. All entities belong to a class with defined properties. Using that knowledge, the system takes a long list and splits into smaller lists. Each smaller list represents entities falling within some range for a property value. For example, for a big list of Employees, the system could break the list down according to employee ID. A first sub-list would contain references to employees with IDs less than 236 and the other smaller list would contain references to employees with IDs greater than 342. This example is illustrated in Figure 8.

Since there is more than one property definition that can be used to create smaller lists, the system offers alternate subdivisions of the oversized content. This is in particular performed for each of the property values that may be viewed by the user. As illustrated in Figure 8, smaller lists are created for the first name, last name, city and state.

If the smaller sub-list is still too large for comfort, the system applies the same operation again on the sub-list, until the user reaches a list small enough to be laid out in full. This is performed automatically for example by assigning to the system a predetermined maximum number of entities that the sub-list may not be exceeded.

Sometimes the amount of data that would be returned by an agent is so large that the system can only accept some of it from the data source and must discard the rest. Imagine what could happen if an agent returned a million references to Customers. The manageable portion that is accepted by the system is displayed using the same technique. As the user accesses restricted subsets of the original list, a more specific query is sent, yielding a smaller number of references. Again that smaller number, for example 100,000, may still be too large to be all taken in by the system. Eventually though, when the user has navigated to a narrow enough subset, the highly constrained query will return a complete yet manageable set of answers which can all be accepted and displayed by the system according to the present invention.

Consequently, such a subdivision of the results or automatic indexing provides to the user a logical structure of the retrieved entities, wherein the user can select a range. It should be noted that this provision could also be applied in other systems, in particular in systems without mutation means, and in general to any displaying system for displaying large sets of data.

In summary, when a user supplies a query to the user, the following steps are performed, according to a preferred embodiment of the present invention:
1. The query is received by the interface and supplied to the processor
2. If required, the user is asked to enter a user ID and a password for authentication, in particular when the requested view is a password protected view
3. The query is processed by the system
4. A plurality of data sources, addressed by the agents, are accessed to retrieve data pertaining to the requested entities, which data is mapped into property values as defined in the agent parameters of the agent.
5. The found entities are presented to the user according using templates dedicated to the requested view. In particular, this step may be performed before the previous step has been finished, in such a manner that the page presented to the user is dynamically updated when more property values are retrieved. In case the number of results is too large, then the list of results is subdivided in smaller list indexed according to several property values and presented to the user. The user may select one of these smaller lists.
6. Meanwhile, there is checked if mutation of each found entity should occur, using mutation patterns and mutation agents. If mutation occurs, additional property values are retrieved and presented to the user, by dynamically updating the users screen.
7. A new query may be input by the user to the system, in particular by selecting a link in the presentation supplied to the user.

The system according to the present invention improves the manner in which data is extracted from data sources, integrated into a model and presented to the user, in particular when the data has to be retrieved from a plurality of data sources which may have different formats.

## Claims

1. An entity retrieving system connectable to at least one data source, said system having a memory into which a plurality of classes are stored, each class defining the structure of said entities, said structure comprising a plurality of property definitions, each property definition identifying property values to be retrieved dedicated to said property definition, said property values being stored in said data sources, said system further comprising an interface and a processor connected to each other, wherein
(a) said classes comprise at least one dependent class hierarchically linked to at least one other class, said dependent class comprising additional property definitions specifying additional property values, in addition to the property values of the classes from which it depends,
(b) said interface is provided for receiving a query and supplying said query to said processor, said query comprising an identifier for identifying a particular class and at least one of said property values,
(c) said processor being provided, under control of said query, for selecting, among said classes, said particular class dedicated to said identifier, and
(d) said interface is further provided
i) for accessing said data sources, under control of said processor,
ii) for retrieving property values pertaining to at least one particular entity that comprise said at least one of said property values and
iii) for outputting the retrieved entities,
characterised in that
said system further comprises mutation means provided for cooperating with said memory, said processor and said interface and for establishing, for each particular entity to be retrieved, if said particular entity pertains to one of said dependent classes of said selected particular class, and retrieving, upon establishing that said particular entity pertains to one of said dependent classes of said selected particular class, said additional properties of said dependent class.

2. A system according to claim 1, wherein
(a) said mutation means comprise a mutation pattern dedicated to said dependent class, said mutation pattern comprising at least one condition, each condition assigning at least one predetermined property value range to one of said property definitions of said class to which said dependent class is hierarchically linked, and
(b) said mutation means are further provided for establishing if said particular entity pertains to said dependent class by verifying if the property value dedicated to said property definition of said particular entity falls within said predetermined property value ranges.

3. A system according to claim 1 or 2, into which memory agents are stored, each agent being dedicated to at least one of said classes, each agent being provided for cooperating with said interface for accessing at least one particular property value pertaining to said particular entity of said class, each agent comprising :
(a) an address for addressing one of said data sources from which said particular property values are to be retrieved,
(b) a series of instructions indicating which data from the addressed data source are to be retrieved by said agent,
(c) at least one agent parameter for assigning, for each property value to be retrieved, a portion of said data to one of said property definitions.

4. A system according to claim 3, wherein said mutation means are further provided
(a) for establishing if said agent comprises a mutation indicator indicating that said agent is a mutation agent, and
(b) for establishing if said particular entity pertains to said dependent class by verifying if said agent has established that said at least one particular property value pertaining to said particular entity is present, upon establishing that said agent comprises said mutation indicator.

5. A system according to claim 3 or 4, wherein a reliability parameter is assigned to said agent.

6. A system according to anyone of the claims 3 to 5, wherein said agent comprises a speciality indicator for indicating the type of the addressed data source.

7. A system according to anyone of the claims 3 to 6, wherein said agent comprises an authoritative indicator for indicating that if the property values retrieved by said agent are empty, then an indication that the entity does not exist is shown to a user of the system.

8. A system according to anyone of the preceding claims, said system further comprising means for displaying the retrieved entities to a user, said system further comprises means for generating, upon receipt of said retrieved entities, at least one list, each list comprising a plurality of property value ranges for subdividing said retrieved entities, and said interface is further provided for enabling said user to select one property value range within one of said lists.

9. A system according to anyone of the preceding claims, into which memory a plurality of models are stored, wherein each of said classes are assigned to one of said models.

10. A method for retrieving entities by using a system according to anyone of the preceding claims comprising the steps of:
(a) receiving said query and supplying said query to a processor;
(b) selecting among said classes, said particular class dedicated to said identifier,
(c) accessing said data sources, under control of said processor,
(d) retrieving property values pertaining to at least one particular entity that comprise said at least one of said property values and
(e) outputting the retrieved entities,
characterised in that said method further comprises the step of
(f) establishing, for each particular entity to be retrieved, if said particular entity pertains to one of said dependent classes of said selected particular class, and
(g) retrieving, upon establishing that said particular entity pertains to one of said dependent classes of said selected particular class, said additional properties of said dependent class.
